# DEMANDE DE BREVET EUROPEEN

(11) **EP 4 043 314 A1**
(43) Date de publication de la demande: **17.08.2022**
(21) Numéro de dépôt: 22156615.1
(22) Date de dépôt: 14.02.2022
(51) Int. Cl.: B61C 15/12, B61C 9/38, B61L 15/00, B60L 15/00

(54) **PROCÉDÉ DE DÉTECTION D'UNE ANOMALIE D'UNE LIGNE DE TRANSMISSION DANS UN VÉHICULE FERROVIAIRE EN DÉPLACEMENT**

(30) Priorité: 16.02.2021 FR 2101463
(71) Demandeur: SNCF Voyageurs, 93200 Saint-Denis (FR)
(72) Inventeur: GOERES, David, 72000 LE MANS (FR)
(74) Mandataire: Argyma

(57) **Abrégé**

Un procédé de détection (P) d'une anomalie d'une ligne de transmission dans un véhicule ferroviaire en déplacement, ladite ligne de transmission reliant un moteur de traction et un essieu d'un bogie et comportant un rapport de réduction de la vitesse du moteur de traction en une vitesse de traction réduite, ledit procédé de détection comprenant :
• une étape de calcul (E1) d'un premier écart (ΔV1) entre la vitesse du véhicule ferroviaire et la vitesse de traction réduite,
• si le premier écart (ΔV1) est supérieur à un premier seuil (S1), une étape de coupure (E2) de l'alimentation du moteur de traction (3),
• une étape de calcul (E3) d'un deuxième écart (ΔV2) entre la vitesse du véhicule ferroviaire et la vitesse de traction réduite,
• si le deuxième écart (ΔV2) est supérieur à un deuxième seuil (S2), une étape de signalisation (E4) d'une anomalie de la ligne de transmission.

## Description

### DOMAINE TECHNIQUE

La présente invention concerne le domaine ferroviaire et vise un procédé de détection d'une anomalie d'une ligne de transmission dans un véhicule ferroviaire en déplacement.

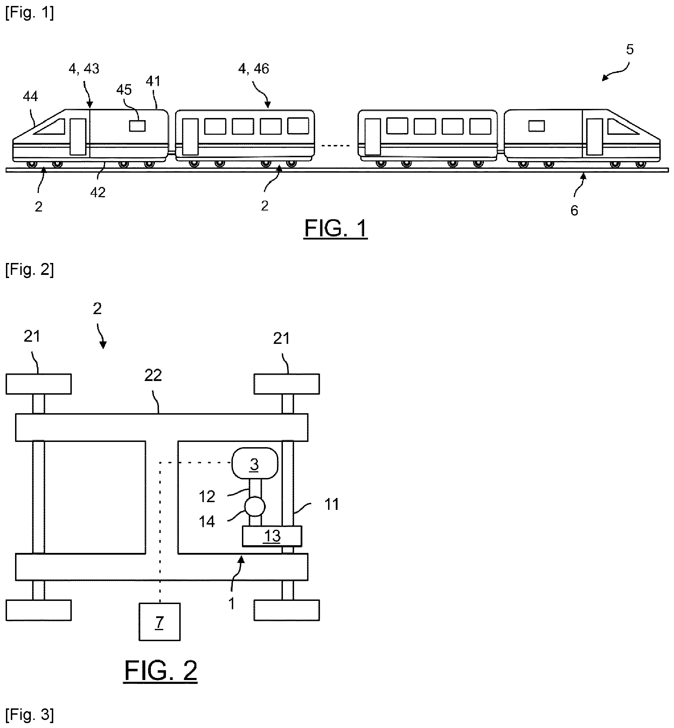

La figure 1 représente de manière connue un véhicule ferroviaire se présentant sous la forme d'une rame ferroviaire 5 comprenant une succession de voitures 4 reliées entre elles, qui comportent chacune une caisse 41 comprenant un châssis 42. On distingue les voitures d'extrémité 43 destinées à la commande de la rame ferroviaire 5 et les voitures intermédiaires 46 destinées à l'accueil des passagers. Une voiture d'extrémité 43 comporte notamment un poste de conduite 44, un système de commande 45, un pantographe et un transformateur électrique (non représentés).

De manière connue, en référence aux figures 1 et 2, un véhicule ferroviaire, dans cet exemple une rame ferroviaire 5, comprend également un ensemble de bogies 2 sur lesquels sont montées les voitures 4. Chaque bogie 2 comprend un ou plusieurs essieux 21 en contact avec les rails ferroviaires 6 ainsi qu'un bâti 22 configuré pour supporter les essieux 21 et le châssis 42 d'une ou de deux voitures 4. Le bogie 2 illustré sur la figure 2 est de type moteur, c'est-à-dire qu'au moins un essieu 21 est couplé à un moteur de traction 3 pour l'entraîner en rotation. Le bogie 2 comprend en outre une ligne de transmission 1 reliant l'essieu 21 et le moteur de traction 3 de manière à transmettre les efforts mécaniques. Il va de soi que les deux essieux 21 d'un bogie 2 pourraient être couplés à un moteur de traction 3.

De manière connue, dans l'exemple de la figure 2, le moteur de traction 3 est supporté par le bâti 22 du bogie 2 et la ligne de transmission 1 comprend un arbre d'essieu 11, un arbre de moteur 12, un réducteur 13 et un coupleur 14. L'arbre d'essieu 11 et l'arbre de moteur 12 sont respectivement reliés à l'essieu 21 et au moteur de traction 3. Le réducteur 13 permet de modifier le rapport de vitesse entre l'arbre de moteur 12 et l'arbre d'essieu 11. Le coupleur 14 relie quant à lui l'arbre de moteur 12 et le réducteur 13. Un bogie 2 à moteur de traction 3 intégré est avantageux lorsque la masse du moteur de traction 3 est faible, à savoir que sa puissance est inférieure à 1200kW, de préférence 1000kW.

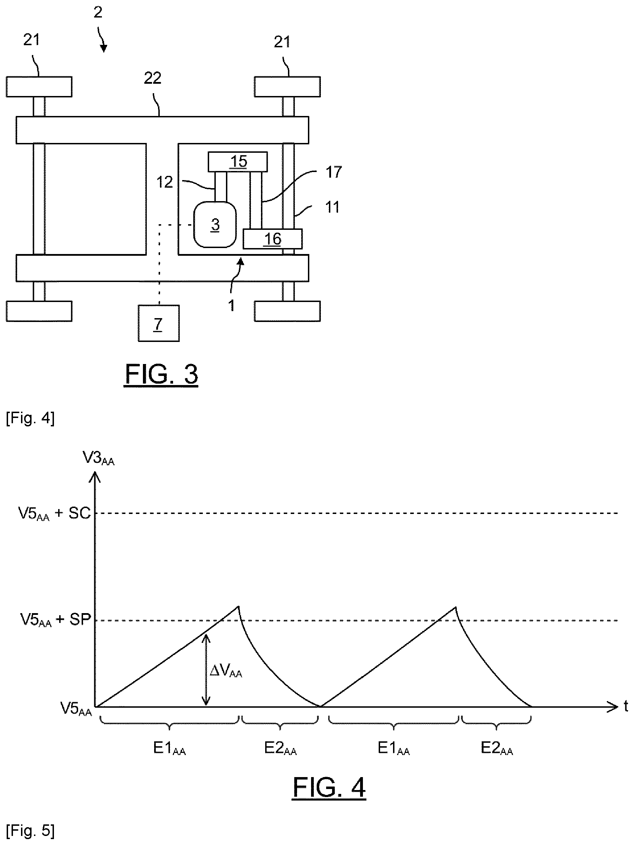

De manière connue, en référence à la figure 3, lorsque la masse du moteur de traction 3 est plus élevée, le moteur de traction 3 est supporté par le châssis 42 d'une voiture 40 et la ligne de transmission 1 comprend une structure plus complexe pour absorber les déplacements entre le bogie 2 et la voiture 4. La ligne de transmission 1 comprend ainsi un réducteur de moteur 15 relié à l'arbre de moteur 12, un réducteur de pont 16 relié à l'arbre d'essieu 11 et un organe de liaison 17 reliant le réducteur de moteur 15 et le réducteur de pont 16. L'organe de liaison 17 se présente usuellement sous la forme d'un cardan, également connu sous le terme de tripode. Un bogie 2 à moteur de traction 3 déporté est par exemple utilisé dans une rame ferroviaire 5 de type train à grande vitesse, connu sous son abréviation TGV, pour limiter la masse du bogie 2 et ainsi augmenter sa vitesse critique d'instabilité.

En pratique, la ligne de transmission 1 est sujette à l'usure et aux sollicitations excessives du moteur de traction 3 au cours de son fonctionnement, ce qui est susceptible d'entraîner à terme l'apparition d'une anomalie, telle que la casse de l'organe de liaison 17. Une telle anomalie doit être détectée au plus tôt, afin d'adapter la conduite de la rame ferroviaire 5 et de permettre sa réparation une fois en gare. A titre d'exemple, lorsque la rame ferroviaire 5 circule à haute vitesse, un organe de liaison 17 cassé est susceptible de former un balourd pouvant endommager le réducteur de moteur 15 et/ou le réducteur de pont 16. Un débris de l'organe de liaison 17 est également susceptible d'être éjecté aux abords des rails 6. La détection rapide de la casse de l'organe de liaison 17 permet avantageusement de réduire significativement ces risques en réduisant la vitesse de la rame ferroviaire 5.

Pour détecter une anomalie de la ligne de transmission 1, comme illustré sur la figure 4, il est connu de comparer la vitesse de la rame ferroviaire V_{5AA} et la vitesse réduite de traction V_{3AA} appliquée à l'essieu 21, à savoir le produit de la vitesse en sortie du moteur de traction 3 par le rapport de réduction de la ligne de transmission 1. Une anomalie est détectée lorsque l'écart ΔV_{AA} est supérieur à un seuil critique SC, usuellement fixé à 50km/h pour un TGV. En effet, la casse de l'organe de liaison 17 entraîne, d'une part, la diminution de la vitesse de l'essieu 21 non couplé et donc celle de la rame ferroviaire 5, et d'autre part, l'augmentation de la vitesse du moteur de traction 3 à vide.

Dans les faits, un tel seuil critique SC ne permet pas d'assurer une détection systématique et fiable du fait de l'action d'un dispositif anti-patinage 7 du système de commande 45, qui fausse la détection. Le dispositif anti-patinage 7 est présent dans toute rame ferroviaire 5 afin d'assurer l'adhérence de l'essieu 21 sur les rails 6. Comme illustré sur la figure 4, pour éviter un phénomène de patinage, à savoir une perte d'adhérence de l'essieu 21, le dispositif anti-patinage 7 réduit E1_{AA} la vitesse du moteur de traction 3 dès que l'écart ΔV_{AA} est non nul. Lorsque l'écart ΔV_{AA} dépasse un seuil de patinage exceptionnel SP, usuellement fixé à 10km/h pour un TGV, le dispositif anti-patinage 7 coupe temporairement E2_{AA} l'alimentation du moteur de traction 3 jusqu'à ce que l'écart ΔV_{AA} soit nul. Comme illustré sur la figure 4, il en résulte, lors d'une anomalie de la ligne de transmission 1, que l'écart ΔV_{AA} oscille sous l'action du dispositif anti-patinage 7 et n'atteint pas le seuil critique SC, supérieur au seuil de patinage exceptionnel SP. Le dispositif anti-patinage 7 interprète de manière erronée une rupture de la ligne de transmission 1 comme un patinage et inhibe toute détection de la rupture.

Une solution immédiate pour résoudre cet inconvénient serait de réduire la valeur du seuil critique SC. Toutefois, cela ne permettrait pas de distinguer de manière fiable une anomalie de la ligne de transmission 1 et un patinage important, notamment observé en automne lors de la chute de feuilles d'arbres sur la voie ferroviaire. Il en résulterait de fausses détections qui entraîneraient des opérations de maintenance inutile.

Une autre solution serait de positionner des capteurs de vitesse en amont et en aval de chaque élément de la ligne de transmission 1 susceptible de présenter une anomalie, afin de mesurer l'écart de vitesse local. Une telle solution est toutefois coûteuse et non implémentable car les bogies 2 sont des environnements très contraints en termes de masse et de volume.

L'invention vise ainsi à détecter de manière fiable, simple et rapide une anomalie d'une ligne de transmission de rame ferroviaire, et plus généralement de tout véhicule ferroviaire.

### PRESENTATION DE L'INVENTION

L'invention concerne un procédé de détection d'une anomalie d'une ligne de transmission dans un véhicule ferroviaire, ledit véhicule ferroviaire comprenant au moins un moteur de traction et au moins un bogie comprenant au moins un essieu et au moins la ligne de transmission, ladite ligne de transmission reliant le moteur de traction et l'essieu de manière à transmettre les efforts mécaniques, ladite ligne de transmission comportant un rapport de réduction déterminé configuré pour convertir la vitesse du moteur de traction en une vitesse de traction réduite appliquée à l'essieu, ledit procédé de détection étant mis en œuvre durant le déplacement du véhicule ferroviaire et comprenant :
- une étape de calcul d'un premier écart entre la vitesse du véhicule ferroviaire et la vitesse de traction réduite à un premier instant, lorsque le moteur de traction est alimenté,
- si le premier écart est supérieur ou égal à un premier seuil prédéterminé, une étape de coupure de l'alimentation du moteur de traction pendant au moins une durée de test prédéterminée,
- une étape de calcul d'un deuxième écart entre la vitesse du véhicule ferroviaire et la vitesse de traction réduite à un deuxième instant postérieur au premier instant de la durée de test,
- si le deuxième écart est supérieur ou égal à un deuxième seuil prédéterminé et fonction de la durée de test et du premier seuil, une étape de signalisation d'une anomalie de la ligne de transmission, de manière à adapter la conduite du véhicule ferroviaire.

Grâce à l'invention, une anomalie de la ligne de transmission reliant le moteur de traction et l'essieu d'un bogie est détectée de manière précoce, fiable, simple, rapide et pratique. En effet, le procédé est mis en oeuvre durant le déplacement du véhicule ferroviaire dès qu'une hausse anormale de la vitesse réduite de traction par rapport à la vitesse du véhicule ferroviaire est observée, ce qui permet une détection précoce et pratique. Un tel procédé est de plus fiable car il est basé sur deux tests, un premier test qui permet de repérer une hausse anormale de la vitesse réduite de traction, pouvant être liée à un patinage exceptionnel ou à une anomalie, et un deuxième test permettant de distinguer une anomalie d'un patinage exceptionnel. Le deuxième test est avantageusement basé sur une coupure temporaire du moteur de traction pour observer l'effort résistant qui lui est opposé. Dans le cas d'un patinage exceptionnel, l'effort résistant sera plus important que dans le cas d'une anomalie, du fait du frottement de l'essieu sur les rails, ce qui se répercute sur la mesure de la vitesse réduite de traction. Un tel procédé de détection est en outre simple et rapide car nécessite uniquement des mesures de vitesse et une coupure temporaire du moteur de traction.

Selon un aspect de l'invention, le premier seuil est supérieur à 10km/h. De préférence, le premier seuil est inférieur à 100km/h. Préférentiellement, le premier seuil est compris entre 30km/h et 60km/h, et de préférence encore, compris entre 45km/h et 55km/h, notamment pour un véhicule ferroviaire de type TGV. Un tel premier seuil est avantageusement suffisamment élevé pour ne pas être franchi dès l'apparition d'un patinage quelconque et suffisamment faible pour repérer toute anomalie éventuelle de la ligne de transmission. Un tel procédé permet ainsi une détection fiable de coût limité en termes de mesures, qui est mise en oeuvre automatiquement, sans action de la cabine de pilotage.

Selon un aspect de l'invention, le procédé de détection comporte de manière préalable une étape de détermination du deuxième seuil à partir d'une courbe de décélération à vide du moteur de traction préalablement entraîné à sa vitesse de croisière. De préférence, l'étape préalable de détermination est mise en œuvre par essai. De manière avantageuse, une telle courbe de décélération à vide modélise la décélération du moteur de traction après l'étape de coupure dans le cas d'une anomalie de la ligne de transmission. En effet, lors d'une anomalie de la ligne de transmission, l'essieu est découplé du moteur de traction et l'effort résistant exercé sur le moteur de traction se limite aux pertes internes du moteur de traction et de la ligne de transmission. Un tel effort résistant est négligeable et comparable à un moteur de traction à vide.

Selon un aspect préféré, le deuxième seuil (S2) est défini à partir de la décélération maximale (ΔVₘₐₓ) de la courbe sur la durée de test, et vérifie préférentiellement la relation suivante, où l'on note (ε) une marge de sécurité : ΔVₘₐₓ + ε = S1 - S2. De préférence, la marge de sécurité vérifie la relation : ε > 0,1 * ΔVₘₐₓ, et préférentiellement la relation : ε < 0,25 * ΔVₘₐₓ. Le deuxième seuil est ainsi avantageusement déterminé à partir du premier seuil en considérant la baisse maximale de vitesse du moteur de traction à vide sur la durée de test. Ceci permet de déterminer un deuxième seuil pertinent pour le moteur de traction considéré et le plus précis possible pour une détection fiable. Un tel deuxième seuil à un deuxième instant donné permet avantageusement à lui seul de détecter une anomalie de la ligne de transmission. Il n'est pas nécessaire de réaliser d'autres mesures à d'autres instants.

Selon un aspect de l'invention, le deuxième seuil est supérieur à 10km/h et, de préférence, inférieur à 30km/h, notamment pour un véhicule ferroviaire de type TGV.

Selon un aspect de l'invention, la durée de test est supérieure ou égale à 3s, et de préférence inférieure à 45s. Une telle durée de test est suffisamment longue pour observer si la vitesse de traction réduite est réduite ou non par le frottement de l'essieu sur les rails et donc pour permettre de distinguer un patinage exceptionnel d'une anomalie de la ligne de transmission. Une telle durée de test permet par ailleurs une mise en œuvre rapide du procédé de détection et engendre ainsi un faible ralentissement du véhicule ferroviaire sans conséquence sur le trafic ferroviaire.

Selon un aspect de l'invention, le procédé de détection comporte, si le premier écart est inférieur au premier seuil, une étape de réduction de l'alimentation du moteur de traction, de manière à stopper le patinage et retrouver l'adhérence de l'essieu. Un tel procédé de détection permet également suivant une deuxième fonction de détecter un patinage sans étape de calcul supplémentaire et de le stopper en agissant sur l'alimentation du moteur de traction.

Selon un aspect de l'invention, le procédé de détection comporte, si le deuxième écart est inférieur au deuxième seuil, une étape de maintien de la coupure de l'alimentation du moteur de traction jusqu'à ce que la vitesse réduite de traction soit égale à la vitesse du véhicule ferroviaire, de manière à stopper le patinage et retrouver l'adhérence de l'essieu. Un tel procédé de détection permet également de détecter un patinage exceptionnel sans étape de calcul supplémentaire, tel qu'en automne en raison de la chute de feuilles d'arbres sur les voies ferroviaires, et de le stopper en prolongeant la coupure d'alimentation du moteur de traction.

Selon un aspect de l'invention, le procédé de détection est mis en œuvre au moyen d'un système de commande du véhicule ferroviaire, de préférence au moyen d'un dispositif anti-patinage du système de commande du véhicule ferroviaire. Le procédé de détection est avantageusement mis en œuvre avec un système existant.

Selon un aspect préféré, la vitesse de traction réduite est mesurée au premier instant et au deuxième instant par un capteur de vitesse, de préférence se présentant sous la forme du capteur de pilotage du moteur de traction. Le procédé de détection est avantageusement mis en œuvre avec un système existant et n'augmente pas la masse et l'encombrement du bogie.

Selon un aspect de l'invention, la ligne de transmission comprend un arbre d'essieu, un arbre de moteur, un réducteur de moteur relié à l'arbre de moteur, un réducteur de pont relié à l'arbre d'essieu et un organe de liaison reliant le réducteur de moteur et le réducteur de pont. De préférence, l'anomalie se présente sous la forme d'une casse de l'organe de liaison. Préférentiellement, l'organe de liaison se présente sous la forme d'un cardan. Un tel procédé de détection permet avantageusement de détecter de manière précoce une telle anomalie afin de réduire la vitesse du véhicule ferroviaire et ainsi éviter que l'organe de liaison ne forme un balourd qui vienne endommager les réducteurs de moteur et de pont voisins ou n'éjecte des morceaux sur les voies ferroviaires.

De préférence, le véhicule ferroviaire se présente sous la forme d'un TGV, configuré pour se déplacer à une vitesse supérieure à 300km/h. La détection d'une anomalie sur un tel TGV permet avantageusement d'adapter sa conduite de manière précoce pour limiter les conséquences de l'anomalie détectée.

Selon un aspect de l'invention, le procédé de détection est mis en œuvre lorsque la vitesse du véhicule ferroviaire est supérieure à 10km/h, de préférence supérieure à 50km/h, de manière à être activé sur la majeure partie du déplacement du véhicule ferroviaire.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique en vue de profil d'une rame ferroviaire.
La figure 2 est une représentation schématique en vue de dessus d'un bogie à moteur de traction intégré comprenant une ligne de transmission.
La figure 3 est une représentation schématique en vue de dessus d'un bogie à moteur de traction déporté comprenant une ligne de transmission.
La figure 4 est une représentation schématique d'un procédé de détection d'une anomalie de la ligne de transmission d'un bogie d'une rame ferroviaire selon l'art antérieur.
La figure 5 est une représentation schématique d'un procédé de détection d'une anomalie de la ligne de transmission d'un bogie d'une rame ferroviaire selon un mode de mise en œuvre de l'invention.
La figure 6 est une représentation schématique des étapes du procédé de détection de la figure 5 dans le cas d'une anomalie de la ligne de transmission.
La figure 7 est une représentation schématique de l'étape de coupure de l'alimentation du moteur de traction du procédé de détection de la figure 5.
La figure 8 est une représentation schématique de l'étape de signalisation du procédé de détection de la figure 5.
La figure 9 est une représentation schématique de l'étape préalable de détermination du deuxième seuil du procédé de détection de la figure 5.
La figure 10 est une représentation schématique des étapes du procédé de détection de la figure 5 dans le cas d'un patinage exceptionnel de l'essieu.
La figure 11 est une représentation schématique des étapes du procédé de détection de la figure 5 dans le cas d'un patinage de l'essieu.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne un procédé de détection d'une anomalie d'une ligne de transmission dans un véhicule ferroviaire en déplacement, permettant une détection fiable simple et rapide, afin d'adapter la conduite du véhicule ferroviaire.

Comme décrit dans le préambule, la figure 1 représente un véhicule ferroviaire se présentant sous la forme d'une rame ferroviaire 5 comprenant une succession de voitures 4 reliées entre elles, qui comportent chacune une caisse 41 comprenant un châssis 42. On distingue les voitures d'extrémité 43 destinées à la commande de la rame ferroviaire 5 et les voitures intermédiaires 46 destinées à l'accueil des passagers. Une voiture d'extrémité 43 comporte notamment un poste de conduite 44, un système de commande 45, un pantographe et un transformateur électrique (non représentés).

Comme décrit dans le préambule, en référence aux figures 1 et 2, un véhicule ferroviaire, dans cet exemple une rame ferroviaire 5, comprend également un ensemble de bogies 2 sur lesquels sont montés les voitures 4. Chaque bogie 2 comprend un ou plusieurs essieux 21 en contact avec les rails ferroviaires 6 ainsi qu'un bâti 22 configuré pour supporter les essieux 21 et le châssis 42 d'une ou de deux voitures 4. Le bogie 2 illustré sur la figure 2 est de type moteur, c'est-à-dire qu'au moins un essieu 21 est couplé à un moteur de traction 3 pour l'entraîner en rotation. Le bogie 2 comprend en outre une ligne de transmission 1 reliant l'essieu 21 et le moteur de traction 3 de manière à transmettre les efforts mécaniques. La ligne de transmission 1 comporte un rapport de réduction déterminé configuré pour convertir la vitesse du moteur de traction 3 en une vitesse de traction réduite appliquée à l'essieu 21. Par la suite, on désigne par V5 la vitesse de la rame et par V3 la vitesse de traction réduite.

Comme décrit dans le préambule, dans l'exemple de la figure 2, le moteur de traction 3 est supporté par le bâti 22 du bogie 2 et la ligne de transmission 1 comprend un arbre d'essieu 11, un arbre de moteur 12, un réducteur 13 et un coupleur 14. L'arbre d'essieu 11 et l'arbre de moteur 12 sont respectivement reliés à l'essieu 21 et au moteur de traction 3. Le réducteur 13 permet de modifier le rapport de vitesse entre l'arbre de moteur 12 et l'arbre d'essieu 11. Le coupleur 14 relie quant à lui l'arbre de moteur 12 et le réducteur 13. Un bogie 2 à moteur de traction 3 intégré est avantageux lorsque la masse du moteur de traction 3 est faible, à savoir que sa puissance est inférieure à 1200kW, de préférence 1000kW.

Comme décrit dans le préambule, en référence à la figure 3, lorsque la masse du moteur de traction 3 est plus élevée, le moteur de traction 3 est supporté par le châssis 42 d'une voiture 40 et la ligne de transmission 1 comprend une structure plus complexe pour absorber les déplacements entre le bogie 2 et la voiture 4. La ligne de transmission 1 comprend ainsi un réducteur de moteur 15 relié à l'arbre de moteur 12, un réducteur de pont 16 relié à l'arbre d'essieu 11 et un organe de liaison 17 reliant le réducteur de moteur 15 et le réducteur de pont 16. L'organe de liaison 17 se présente usuellement sous la forme d'un cardan, également connu sous le terme de tripode, Un bogie 2 à moteur de traction 3 déporté est par exemple utilisé dans une rame ferroviaire 5 de type train à grande vitesse, connu sous son abréviation TGV, pour limiter la masse du bogie 2 et ainsi augmenter sa vitesse critique d'instabilité.

Comme décrit dans le préambule, en pratique, la ligne de transmission 1 est sujette à l'usure et aux sollicitations excessives du moteur de traction 3 lors de son fonctionnement, ce qui est susceptible d'entraîner à terme l'apparition d'une anomalie, telle que la casse de l'organe de liaison 17. On qualifie d'anomalie toute endommagement de la ligne de transmission 1 conduisant à la perte d'accouplement entre le moteur de traction 3 et l'essieu 21. Une telle anomalie doit être détectée au plus tôt, afin d'adapter la conduite de la rame ferroviaire 5 et de permettre sa réparation une fois en gare. A titre d'exemple, un organe de liaison 17 cassé est susceptible, à haute vitesse de la rame ferroviaire 5, de former un balourd pouvant endommager le réducteur de moteur 15 ou le réducteur de pont 16. Un débris de l'organe de liaison 17 est également susceptible d'être éjecté aux abords des rails 6. La détection rapide de la casse de l'organe de liaison 17 permet avantageusement de réduire significativement ces risques en réduisant la vitesse de la rame ferroviaire 5.

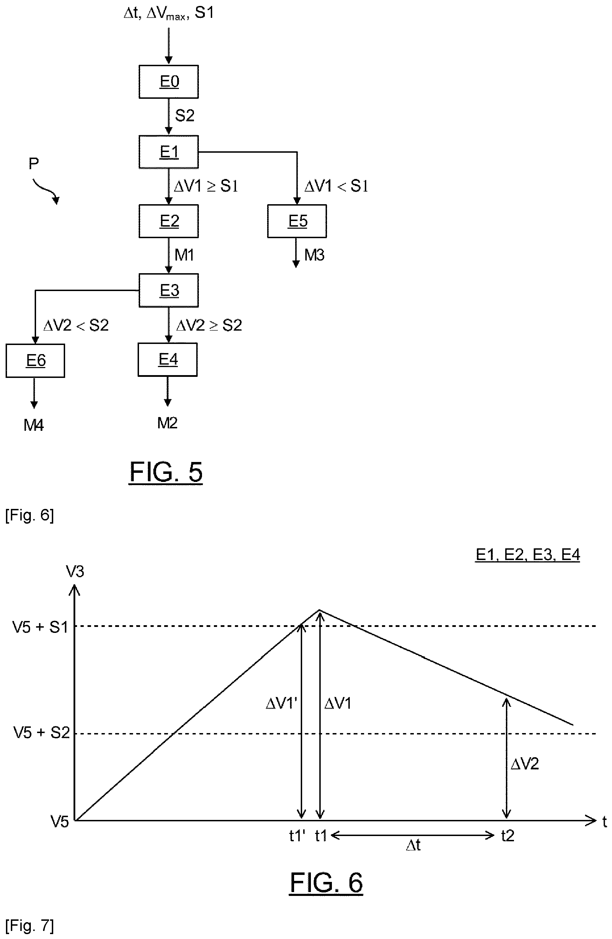

Selon l'invention, en référence aux figures 5 et 6, pour détecter la casse de l'organe de liaison 17 ou plus généralement toute anomalie de la ligne de transmission 1, le procédé de détection P est mis en œuvre durant le déplacement de la rame ferroviaire 5 et comprend :
- une étape de calcul E1 d'un premier écart ΔV1 entre la vitesse V5 de la rame ferroviaire 5 et la vitesse de traction réduite V3 à un premier instant t1, lorsque le moteur de traction 3 est alimenté,
- si le premier écart ΔV1 est supérieur ou égal à un premier seuil S1 prédéterminé, une étape de coupure E2 de l'alimentation du moteur de traction 3 pendant au moins une durée de test Δt prédéterminée,
- une étape de calcul E3 d'un deuxième écart ΔV2 entre la vitesse V5 du véhicule ferroviaire et la vitesse de traction réduite V3 à un deuxième instant t2 postérieur au premier instant t1 de la durée de test Δt,
- si le deuxième écart ΔV2 est supérieur ou égal à un deuxième seuil S2 prédéterminé et fonction de la durée de test Δt et du premier seuil S1, une étape de signalisation E4 d'une anomalie de la ligne de transmission 1, de manière à adapter la conduite de la rame ferroviaire 5.

De préférence, en référence à la figure 5, le procédé de détection P comprend au préalable une étape de détermination E0 du deuxième seuil S2 à partir d'une courbe de décélération à vide du moteur de traction 3 préalablement entraîné à sa vitesse de croisière.

Toujours de préférence, en référence à la figure 5, le procédé de détection P comprend également :
- si le premier écart ΔV1 est inférieur au premier seuil S1, une étape de réduction E5 de l'alimentation du moteur de traction 3, de manière à stopper le patinage et retrouver l'adhérence de l'essieu 21,
- si le deuxième écart ΔV2 est inférieur au deuxième seuil S2, une étape de maintien E6 de la coupure de l'alimentation du moteur de traction 3 jusqu'à ce que la vitesse réduite de traction V3 soit égale à la vitesse V5 de la rame ferroviaire 5, de manière à stopper le patinage et retrouver l'adhérence de l'essieu 21.

Autrement dit, le procédé P permet à la fois de détecter une anomalie de la ligne de transmission 1 et un patinage de l'essieu 21, à savoir un phénomène de perte d'adhérence de l'essieu 21 sur les rails 6. Dans le cas d'un patinage et notamment d'un patinage exceptionnel, observé par exemple en automne lors de la chute de feuilles d'arbres sur les voies, le procédé P permet de retrouver l'adhérence de l'essieu 21. De préférence, le procédé de détection P est mis en œuvre par le système de commande 45 (figure 1) et préférentiellement par un dispositif anti-patinage 7 (figures 2 et 3) du système de commande 45. La vitesse de traction réduite V3 est par ailleurs mesurée au moyen d'un capteur de vitesse, de préférence par le capteur de pilotage du moteur de traction 3. Le procédé de détection P utilise avantageusement un système existant.

On décrit par la suite plus précisément les étapes E0, E1, E2, E3, E4, E5, E6 du procédé P en considérant successivement le cas d'une anomalie de la ligne de transmission 1, le cas d'un patinage de l'essieu 21 et le cas d'un patinage exceptionnel de l'essieu 21.

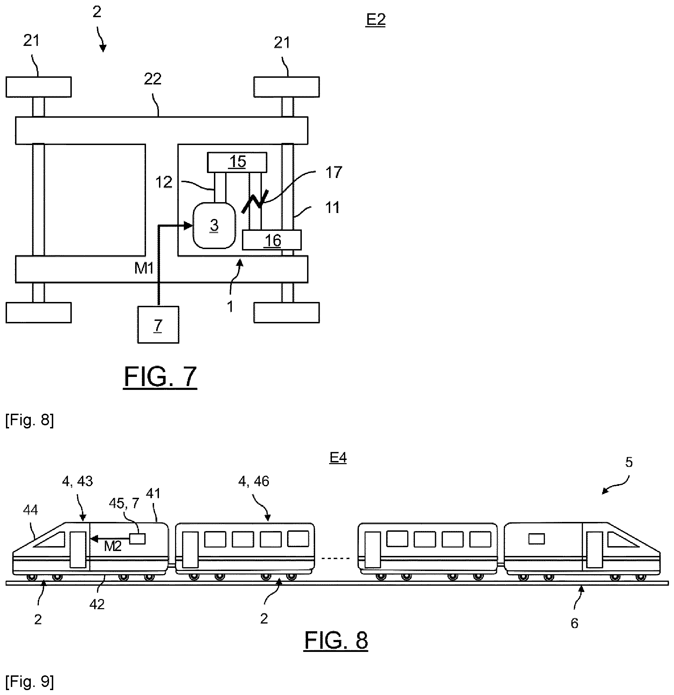

La courbe de la figure 6 illustre l'évolution temporelle de la vitesse de traction réduite V3 par rapport à la vitesse V5 de la rame ferroviaire 5 durant le procédé de détection P, dans le cas d'une anomalie de la ligne de transmission 1, et plus précisément d'une casse de l'organe de liaison 17 (figure 7). La présence ou non d'une anomalie de la ligne de transmission 1 n'est à priori pas connue avant la mise en œuvre du procédé de détection P.

Comme illustré sur la figure 6, le procédé de détection P débute par une étape de calcul E1 d'un premier écart ΔV1 à un premier instant t1 vérifiant la relation suivante : ΔV1 = V3 - V5. La vitesse de traction réduite V3 est mesurée par le capteur de pilotage du moteur de traction 3 au premier instant t1. La vitesse V5 de la rame ferroviaire 5 est mesurée simultanément. La vitesse de traction réduite V3 correspond à la vitesse de consigne appliquée à l'essieu 21 tandis que la vitesse V5 de la rame ferroviaire 5 correspond à la vitesse réelle de l'essieu 21. Le premier écart ΔV1 est ainsi sensiblement nul lors du fonctionnement normal de la rame ferroviaire 5. Un premier écart ΔV1 non nul permet avantageusement de repérer un fonctionnement anormal de la rame ferroviaire 5.

Dans l'exemple de la figure 6, le premier écart ΔV1 mesuré est supérieur au premier seuil S1 prédéterminé. Le seuil S1 permet avantageusement de caractériser le fonctionnement anormal de la rame ferroviaire 5 en distinguant d'une part le cas d'un patinage et d'autre part le cas d'un patinage exceptionnel ou d'une anomalie de la ligne de transmission 1. En effet, dans le cas d'un patinage, le premier écart ΔV1 reste inférieur au premier seuil S1 s'il n'est pas exceptionnel. Un phénomène de patinage est régulièrement observé lors d'un déplacement de la rame ferroviaire 5 et le premier seuil S1 permet avantageusement d'écarter cette possibilité de manière simple, pratique et rapide. De préférence, le premier seuil S1 est prédéterminé et vérifie : 10km/h < S1 < 100km/h. Dans l'exemple d'une rame ferroviaire 5 de type TGV, le premier seuil S1 vérifie : 30km/h < S1 < 60km/h, et de préférence : 45km/h < S1 < 55km/h.

Selon un aspect préféré, lors de l'étape de calcul E1, un premier écart préliminaire ΔV1' est calculé à un premier instant préliminaire t1' précédant le premier instant t1 d'au moins 1s. De préférence, le premier écart préliminaire ΔV1' et le premier écart ΔV1 sont tous deux comparés au premier seuil S1 afin de vérifier que le premier écart ΔV1 reflète une hausse durable de la vitesse de traction réduite V3 par rapport à la vitesse V5 de la rame ferroviaire 5. Comme illustré à la figure 6, les écarts ΔV1', ΔV1 sont supérieurs au premier seuil S1, ce qui montre une croissance de l'écart. Toute détection intempestive peut ainsi être évitée.

Comme illustré sur les figures 6 et 7, le procédé de détection P se poursuit par une étape de coupure E2 de l'alimentation du moteur de traction 3, lors de laquelle le dispositif anti-patinage 7 envoie un signal de commande M1 au moteur de traction 3. Le signal de commande M1 permet de couper l'alimentation pendant une durée de test Δt prédéterminée. On précise qu'aucun freinage n'est mis en œuvre durant l'étape de coupure E2. L'étape de coupure E2 permet avantageusement d'observer le comportement du moteur de traction 3 non alimenté afin de distinguer un patinage exceptionnel d'une anomalie de la ligne de transmission 1. En effet, en l'absence d'alimentation, la vitesse de traction réduite V3 diminue en fonction de l'effort résistant appliqué au moteur de traction 3. Dans le cas d'un patinage exceptionnel, l'effort résistant correspond à la somme des pertes internes de la ligne de transmission 1 et du moteur de traction 3 ainsi que du frottement de l'essieu 21 sur les rails 6. Dans le cas d'une anomalie de la ligne de transmission 1, l'essieu 21 est découplé du moteur de traction 3 et l'effort résistant résulte uniquement des pertes internes, négligeables par rapport au frottement de l'essieu 21 sur les rails 6. La vitesse de traction réduite V3 diminue ainsi plus lentement dans le cas d'une anomalie de la ligne de transmission 1.

Comme illustré sur la figure 6, le procédé de détection P comprend, après l'étape de coupure E2, une étape de calcul E3 d'un deuxième écart ΔV2 à un deuxième instant t2 vérifiant la relation suivante : ΔV2 = V3 - V5. Le deuxième instant t2 est écarté temporellement du premier instant t1 de la durée de test Δt. De préférence, la durée de test Δt vérifie la relation suivante : 3s < Δt < 45s, et préférentiellement 10s < Δt < 20s, de manière à ce que le deuxième écart ΔV2 permette une caractérisation fiable sans engendrer de ralentissement significatif de la rame ferroviaire 5 et donc perturber le trafic ferroviaire.

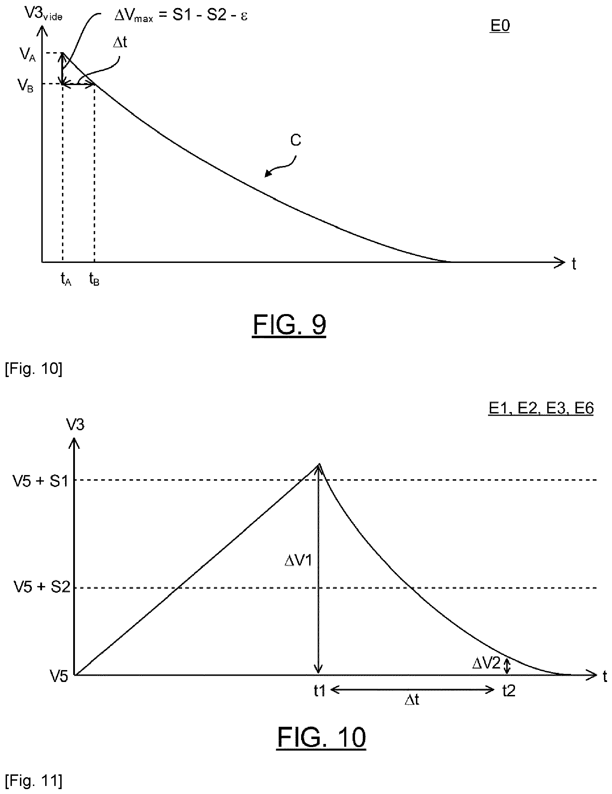

Comme illustré sur la figure 6, le deuxième écart ΔV2 est ensuite comparé à un deuxième seuil S2, en-dessous duquel le fonctionnement anormal de la rame ferroviaire 5 est attribué à un patinage exceptionnel et au-dessus duquel le fonctionnement anormal est attribué à une anomalie de la ligne de transmission 1. Selon un aspect préféré, en référence à la figure 9, le deuxième seuil S2 est déterminé E0 de manière préalable à partir d'une courbe C de décélération à vide du moteur de traction 3 préalablement entraîné à sa vitesse de croisière V_{A}. On précise que la vitesse de croisière VA correspond à la meilleure vitesse moyenne sur une longue distance, de l'ordre de 300km/h dans le cas d'un TGV. En faisant l'hypothèse que l'effort résistant opposé au moteur de traction 3 est négligeable dans le cas d'une anomalie de la ligne de transmission 1, sa courbe de décélération C correspond à celle d'une décélération à vide comme celle de la figure 9. Afin d'obtenir une discrimination optimale, le deuxième seuil S2 est de préférence défini à partir de la baisse maximale ΔVₘₐₓ de la vitesse à vide V3_{vide} sur la durée de test Δt suivant la relation suivante : S1 - S2 = ΔVₘₐₓ + ε, où l'on note ε une marge de sécurité. De préférence, la marge de sécurité ε vérifie la relation suivante : 0,1 * ΔVₘₐₓ < ε < 0,25 * ΔVₘₐₓ. Dans cet exemple, en considérant une durée de test Δt de 15s et un premier seuil S1 fixé à 50km/h, la baisse maximale ΔVₘₐₓ atteint 25km/h et la marge de sécurité ε choisie est de 5km/h, ce qui correspond à un deuxième seuil S2 égal à 20km/h. De préférence, le deuxième seuil S2 est compris entre 10km/h et 30km/h ppur un TGV. Une telle étape de détermination E0 permet avantageusement de fixer un deuxième seuil S2 précis et fiable propre au moteur de traction 3 utilisé. De manière préférée, la baisse maximale ΔVₘₐₓ de la vitesse à vide V3_{vide} sur la durée de test Δt est observée pour une durée de test Δt débutant dès la coupure d'alimentation du moteur de traction 3 préalablement entraîné à sa vitesse de croisière V_{A}. Autrement dit, la baisse maximale ΔVₘₐₓ est déterminée à partir de la vitesse de croisière V_{A} à un instant t_{A} et jusqu'à une vitesse V_{B} à un instant t_{B} vérifiant les relations : Δt = t_{A} - t_{B} et ΔVₘₐₓ= V_{A} - V_{B}.

Dans l'exemple de la figure 6, le deuxième écart ΔV2 est supérieur au deuxième seuil S2 et le procédé de détection P comprend ensuite une étape finale de signalisation E4 d'une anomalie de la ligne de transmission 1. De préférence, comme illustré sur la figure 8, l'étape de signalisation E4 est mise en œuvre par le dispositif anti-patinage 7 en transmettant un signal d'alerte M2 au poste de conduite 44. Ceci permet au poste de conduite 44 d'adapter la conduite de la rame ferroviaire 5 en conséquence, en réduisant sa vitesse et en prévoyant une réparation.

La courbe de la figure 10 illustre l'évolution temporelle de la vitesse de traction réduite V3 par rapport à la vitesse V5 de la rame ferroviaire 5 durant le procédé de détection P, dans le cas d'un patinage exceptionnel. La présence ou non d'un patinage exceptionnel n'est à priori pas connue avant la mise en œuvre du procédé de détection P.

En référence à la figure 10, le procédé de détection P diffère de celui précédemment présenté à partir de la fin de l'étape de calcul E3 du deuxième écart ΔV2. En effet, dans l'exemple de la figure 10, le deuxième écart ΔV2 est inférieur au deuxième seuil S2 et une étape de maintien E6 de la coupure de l'alimentation du moteur de traction 3 est mise en œuvre en lieu et place de l'étape de signalisation E4. Aucune étape de signalisation n'est mise en œuvre. La coupure de l'alimentation est maintenue de sorte à continuer de faire baisser la vitesse de traction réduite V3 par rapport à la vitesse V5 de la rame ferroviaire 5. La coupure de l'alimentation est de préférence maintenue jusqu'à ce que la vitesse réduite de traction V3 soit égale à la vitesse V5 de la rame ferroviaire 5, de manière à stopper le patinage exceptionnel et retrouver l'adhérence de l'essieu 21. L'étape de maintien E6 est de préférence mise en œuvre par le dispositif anti-patinage 7 via un signal de consigne M4 au moteur de traction 3 (figure 5).

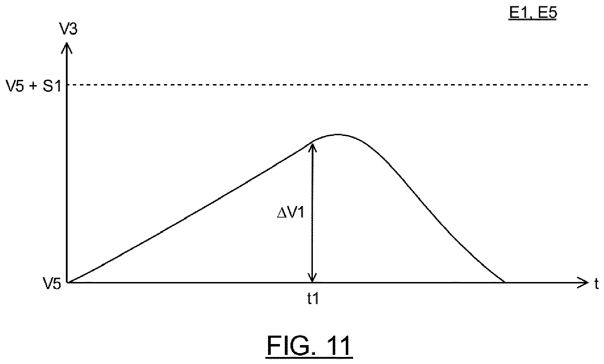

La courbe de la figure 11 illustre l'évolution temporelle de la vitesse de traction réduite V3 par rapport à la vitesse V5 de la rame ferroviaire 5 durant le procédé de détection P, dans le cas d'un patinage. La présence ou non d'un patinage n'est à priori pas connue avant la mise en œuvre du procédé de détection P.

En référence à la figure 11, le procédé de détection P diffère de celui précédemment présenté à partir de la fin de l'étape de calcul E1 du premier écart ΔV1. En effet, dans l'exemple de la figure 11, le premier écart ΔV1 est inférieur au premier seuil S1 et une étape de réduction E5 de l'alimentation du moteur de traction 3 est mise en œuvre. L'étape de réduction E5 permet avantageusement de réduire la vitesse de traction réduite V3 par rapport à la vitesse V5 de la rame ferroviaire 5, de manière à stopper le patinage et retrouver l'adhérence de l'essieu 21. L'étape de réduction E5 est de préférence mise en œuvre par le dispositif anti-patinage 7 via un signal de consigne M3 au moteur de traction 3 (figure 5). Le signal de consigne M3 est en pratique déterminé en fonction de la vitesse V5 de la rame ferroviaire 5 mais également de son accélération et de la dérivée de son accélération. Le signal de consigne M3 est en pratique inférieur ou égal à un talon d'effort maximal, de l'ordre de 2kN dans le cas d'une rame ferroviaire 5 de type TGV. Ceci permet de corriger le patinage sans perturber la détection d'une éventuelle anomalie. En effet, dans le cas d'une anomalie, la vitesse de traction réduite V3 va continuer à augmenter malgré le signal de consigne M3 de sorte à atteindre le premier seuil S1 (voir figures 6 et 10). L'étape de coupure E2 pourra ainsi être mise en œuvre afin de déterminer s'il s'agit d'un patinage exceptionnel ou d'une anomalie de la ligne de transmission 1.

Le procédé de détection P permet ainsi avantageusement de détecter une anomalie de la ligne de transmission 1 de manière précoce et simple durant le déplacement de la rame ferroviaire 5, mais également de manière fiable et rapide via un double test basé sur des écarts de vitesse. Le procédé de détection P permet également de détecter un patinage à partir des mêmes écarts de vitesse et de le stopper en asservissant la vitesse du moteur de traction 3.

## Revendications

1. Procédé de détection (P) d'une anomalie d'une ligne de transmission (1) dans un véhicule ferroviaire, ledit véhicule ferroviaire comprenant au moins un moteur de traction (3) et au moins un bogie (2) comprenant au moins un essieu (21) et au moins la ligne de transmission (1), ladite ligne de transmission (1) reliant le moteur de traction (3) et l'essieu (21) de manière à transmettre les efforts mécaniques, ladite ligne de transmission (1) comportant un rapport de réduction déterminé configuré pour convertir la vitesse du moteur de traction (3) en une vitesse de traction réduite (V3) appliquée à l'essieu (21), ledit procédé de détection (P) étant mis en œuvre durant le déplacement du véhicule ferroviaire et comprenant :
• une étape de calcul (E1) d'un premier écart (ΔV1) entre la vitesse (V5) du véhicule ferroviaire et la vitesse de traction réduite (V3) à un premier instant (t1), lorsque le moteur de traction (3) est alimenté,
• si le premier écart (ΔV1) est supérieur ou égal à un premier seuil (S1) prédéterminé, une étape de coupure (E2) de l'alimentation du moteur de traction (3) pendant au moins une durée de test (Δt) prédéterminée,
• une étape de calcul (E3) d'un deuxième écart (ΔV2) entre la vitesse (V5) du véhicule ferroviaire et la vitesse de traction réduite (V3) à un deuxième instant (t2) postérieur au premier instant (t1) de la durée de test (Δt),
• si le deuxième écart (ΔV2) est supérieur ou égal à un deuxième seuil (S2) prédéterminé et fonction de la durée de test (Δt) et du premier seuil (S1), une étape de signalisation (E4) d'une anomalie de la ligne de transmission (1), de manière à adapter la conduite du véhicule ferroviaire.

2. Procédé de détection (P) selon la revendication 1, dans lequel le premier seuil (S1) est supérieur à 10km/h, et de préférence inférieur à 100km/h, préférentiellement compris entre 30km/h et 60km/h.

3. Procédé de détection (P) selon l'une des revendications 1 et 2, dans lequel le deuxième seuil (S2) est déterminé à partir d'une courbe (C) de décélération à vide du moteur de traction (3) préalablement entraîné à sa vitesse de croisière (V_{A}), ledit deuxième seuil (S2) étant de préférence défini à partir de la décélération maximale (ΔVₘₐₓ) de la courbe (C) sur la durée de test (Δt).

4. Procédé de détection (P) selon l'une des revendications 1 à 3, dans lequel le deuxième seuil (S2) est supérieur à 10km/h et, de préférence, inférieur à 30km/h.

5. Procédé de détection (P) selon l'une des revendications 1 à 4, dans lequel la durée de test (Δt) est supérieure ou égale à 3s, et de préférence inférieure à 45s.

6. Procédé de détection (P) selon l'une des revendications 1 à 5, comportant, si le premier écart (ΔV1) est inférieur au premier seuil (S1), une étape de réduction (E5) de l'alimentation du moteur de traction (3), de manière à stopper le patinage et retrouver l'adhérence de l'essieu (21).

7. Procédé de détection (P) selon l'une des revendications 1 à 6, comportant, si le deuxième écart (ΔV2) est inférieur au deuxième seuil (S2), une étape de maintien (E6) de la coupure de l'alimentation du moteur de traction (3) jusqu'à ce que la vitesse réduite de traction (V3) soit égale à la vitesse (V5) du véhicule ferroviaire, de manière à stopper le patinage et retrouver l'adhérence de l'essieu (21).

8. Procédé de détection (P) selon l'une des revendications 1 à 7, qui est mis en œuvre au moyen d'un système de commande (45) du véhicule ferroviaire, de préférence au moyen d'un dispositif anti-patinage (7) du système de commande (45) du véhicule ferroviaire.

9. Procédé de détection (P) selon l'une des revendications 1 à 8, dans lequel la ligne de transmission (1) comprend un arbre d'essieu (11), un arbre de moteur (12), un réducteur de moteur (15) relié à l'arbre de moteur (12), un réducteur de pont (16) relié à l'arbre d'essieu (11) et un organe de liaison (17) reliant le réducteur de moteur (15) et le réducteur de pont (16), l'anomalie se présentant de préférence sous la forme d'une casse de l'organe de liaison (17).

10. Procédé de détection (P) selon l'une des revendications 1 à 9, qui est mis en œuvre lorsque la vitesse (V5) du véhicule ferroviaire est supérieure à 10km/h, de préférence supérieure à 50km/h.
